# FASCICULE DE BREVET EUROPEEN

(11) **EP 3 109 155 B1**
(45) Date de publication et mention de la délivrance du brevet: **15.11.2017**
(21) Numéro de dépôt: 16172230.1
(22) Date de dépôt: 31.05.2016
(51) Int. Cl.: B64C 27/12, B64D 31/06, B64D 35/08, F02C 9/42, B64C 27/06, F02C 6/20

(54) **PROCEDE DE REGULATION D'UNE INSTALLATION MOTRICE TRIMOTEUR POUR UN AERONEF A VOILURE TOURNANTE**
REGULIERVERFAHREN FÜR EINE DREIMOTORIGE ANTRIEBSANLAGE FÜR EIN DREHFLÜGELFLUGZEUG
A METHOD OF REGULATING A THREE-ENGINED POWER PLANT FOR A ROTARY WING AIRCRAFT

(30) Priorité: 23.06.2015 FR 1501300
(43) Date de publication de la demande: 28.12.2016
(73) Titulaire: Airbus Helicopters, 13725 Marignane Cedex (FR)
(72) Inventeur: ROSSOTTO, Régis, 13012 MARSEILLE (FR)
(74) Mandataire: GPI & Associés

(56) Documents cités:
- EP-A1- 2 735 508
- FR-A1- 3 008 957

## Description

La présente invention se situe dans le domaine de la motorisation des aéronefs à voilures tournantes comportant plusieurs moteurs, et plus particulièrement dans le domaine de la régulation d'une telle motorisation.

La présente invention concerne un procédé de régulation d'une installation motrice pour un aéronef à voilure tournante ainsi que cette installation motrice et un aéronef à voilure tournante muni d'une telle installation motrice. Cette invention est particulièrement destinée à la régulation d'une installation motrice comportant trois moteurs.

Une installation motrice pour un aéronef à voilure tournante comprend généralement un ou deux moteurs et une boîte de transmission principale de puissance. Chaque moteur entraine mécaniquement la boîte de transmission principale de puissance afin de mettre en rotation au moins un arbre principal de sortie de la boîte de transmission principale de puissance. Cet arbre principal de sortie est solidaire en rotation avec au moins un rotor principal de l'aéronef à voilure tournante afin d'assurer la sustentation, voire la propulsion de l'aéronef.

Cette boîte de transmission principale de puissance dispose généralement d'arbres secondaires de sortie pouvant par exemple entrainer en rotation un rotor arrière ou bien une ou deux hélices de propulsion par l'intermédiaire d'une boîte de transmission auxiliaire de puissance ainsi qu'un générateur d'énergie électrique et/ou des systèmes hydrauliques. Les fréquences respectives de rotation de ces arbres secondaires de sortie sont généralement différentes de la fréquence de rotation de l'arbre principal de sortie.

Il est à noter que l'on entend par moteur une unité motrice entrainant mécaniquement ladite boîte de transmission principale de puissance et, par suite, participant à la sustentation et/ou à la propulsion de l'aéronef à voilure tournante. De tels moteurs sont par exemple des turbomoteurs.

Par ailleurs, il est fréquent aujourd'hui d'utiliser sur les aéronefs à voilures tournantes une installation motrice comportant deux moteurs, chaque moteur étant piloté par un calculateur dédié. Ces moteurs sont généralement des turbomoteurs identiques fonctionnant selon des règles de régulation.

Par exemple, il existe la régulation proportionnelle qui permet de réguler un système proportionnellement à un écart entre une valeur courante du système qui doit être régulée et une consigne. Une telle régulation est en général efficace. Par contre, la valeur de la consigne n'est jamais atteinte par une régulation proportionnelle, un écart entre la valeur courante et la consigne existant en permanence. On peut cependant se rapprocher de la consigne en diminuant cet écart, mais le système devient souvent dans ce cas instable.

Une telle régulation proportionnelle, appliquée à une installation motrice bimoteur d'un aéronef, permet un équilibrage naturel des deux moteurs de l'installation motrice, aussi bien en termes de fréquence de rotation que de puissance fournie. Cependant, une stabilité de la fréquence de rotation du rotor principal de l'aéronef ne peut être assurée précisément et efficacement par une telle régulation proportionnelle.

Il est alors possible d'ajouter un calcul d'anticipation de la puissance que doit fournir l'installation motrice afin d'améliorer l'efficacité de cette régulation proportionnelle de la fréquence de rotation du rotor principal de l'aéronef. Un tel calcul d'anticipation de la puissance est notamment décrit dans le document FR3000466 dans le cadre particulier d'une fréquence de rotation variable de ce rotor principal.

Afin d'améliorer la régulation proportionnelle, on peut également introduire une correction supplémentaire qui permet de supprimer des erreurs de suivi de la consigne. Cette correction est proportionnelle à l'intégration de l'écart entre la valeur courante et la consigne dans le temps, c'est-à-dire proportionnelle à la somme de tous les écarts mesurés en permanence. On parle alors d'une régulation proportionnelle intégrale.

Il existe également la régulation proportionnelle intégrale dérivée qui comporte une correction supplémentaire, proportionnelle à la dérivée de cet écart. Cette correction permet de prendre en compte également les variations de cet écart, que ce soit en direction et en amplitude.

Des régulations proportionnelles intégrales sont fréquemment utilisées sur des aéronefs bimoteur permettant ainsi de maitriser parfaitement la fréquence de rotation du rotor principal ainsi que les performances de l'aéronef. Le fonctionnement est alors équilibré entre les deux moteurs de l'installation motrice permettant notamment d'avoir une usure symétrique de ces moteurs ainsi qu'au niveau des liaisons mécaniques en entrée de la boite de transmission principale.

Par contre, de telles régulations proportionnelles intégrales nécessitent des connexions complexes entre les calculateurs des deux moteurs afin que chaque moteur délivre une puissance équivalente. De telles régulations proportionnelles intégrales nécessitent notamment l'utilisation d'une boucle d'équilibrage entre les deux calculateurs.

De plus, ces calculateurs doivent être relativement performants pour permettre une telle régulation. Par exemple, ces calculateurs sont de type « FADEC » selon l'acronyme de la désignation en langue anglaise « Full Authority Digital Engine Control ». Ces calculateurs sont également souvent bi-canaux, c'est-à-dire que les liaisons entre les calculateurs ainsi qu'entre les calculateurs et les moteurs sont doublées afin de sécuriser ces liaisons et, par suite, le fonctionnement de l'installation motrice.

En outre, la taille des aéronefs à voilures tournantes tendant à augmenter, le besoin de puissance au niveau de leur installation motrice augmente également. En conséquence, l'installation motrice de ces aéronefs est amenée à comporter au moins trois moteurs pour être capable de fournir une puissance suffisante.

Les aéronefs à voilures tournantes trimoteur sont aujourd'hui principalement équipés de trois moteurs identiques permettant notamment d'assurer la réactivité de l'installation motrice en cas de panne d'un moteur ainsi que pour simplifier l'installation et l'intégration des moteurs.

On appelle « moteurs identiques » des moteurs ayant des caractéristiques d'entraînement identiques d'un organe rotatif.

A l'inverse, on appelle « moteurs inégaux » des moteurs ayant des caractéristiques d'entraînement distinctes, à savoir des moteurs générant des puissances maximales différentes et/ou des couples maximaux inégaux et/ou des fréquences de rotation maximales d'un arbre de sortie différentes. Ainsi, deux moteurs inégaux peuvent correspondre respectivement à un moteur entraînant un arbre de sortie à plusieurs dizaines de milliers de tours par minute et à un moteur entraînant un arbre de sortie à moins de dix mille tours par minute par exemple.

Pour une installation motrice comportant trois moteurs identiques, les régulations de ces trois moteurs identiques sont généralement identiques, chaque moteur fournissant une puissance équivalente.

Cependant, les régulations de ces trois moteurs identiques peuvent être différentes, deux moteurs étant par exemple considérés comme des moteurs principaux et le troisième moteur étant considéré comme un moteur secondaire. Ce moteur secondaire fournit alors un complément de puissance aux deux moteurs principaux en fonction des sollicitations et des besoins de l'installation motrice. La puissance fournie par le moteur secondaire est alors généralement différente de la puissance de chaque moteur principal.

Il est également possible d'utiliser des moteurs inégaux dans une installation motrice trimoteur afin par exemple de répondre aux exigences de sécurité ou bien de pallier le manque de puissance des moteurs disponibles sur le marché. Pour une telle installation motrice trimoteur, les régulations de ces moteurs peuvent s'avérer encore plus complexes, notamment au niveau de la répartition de la puissance de chaque moteur et de la régulation de la fréquence de rotation du rotor principal.

Dans ces deux cas, que les moteurs de l'installation motrice soient identiques ou bien inégaux, la répartition de puissance entre les moteurs principaux et chaque moteur secondaire de cette installation motrice peut être problématique et complexe à optimiser.

On connait notamment les documents FR2998542, FR2998543 et FR3008957 qui décrivent une installation motrice pour un aéronef à voilure tournante comportant deux moteurs principaux identiques et un moteur secondaire.

Le document FR2998542 décrit un moteur secondaire fournissant une puissance secondaire constante, ce moteur secondaire étant mis en route dans certains cas de vol particuliers tel qu'un atterrissage, un décollage ou un vol stationnaire.

Par contre, le document FR2998543 décrit un moteur secondaire fournissant une puissance secondaire qui est proportionnelle à la puissance principale fournie par chaque moteur principal selon un coefficient de proportionnalité inférieur ou égal à 0.5.

Selon le document FR3008957, les moteurs principaux sont régulés suivant une première consigne de la fréquence de rotation du rotor principal de l'aéronef alors que le moteur secondaire est régulé suivant une deuxième consigne de puissance de ce moteur secondaire. De plus, les moteurs principaux sont régulés également suivant une troisième consigne d'anticipation de puissance afin que les moteurs principaux et le moteur secondaire fournissent conjointement la puissance nécessaire au niveau du rotor principal pour le vol de l'aéronef.

Le dimensionnement de l'installation motrice d'un aéronef s'avère donc complexe, indépendamment de la configuration choisie.

Parmi l'arrière plan technologique, on connaît le document US4479619 qui propose un système de transmission de puissance pour des hélicoptères trimoteur. Cette solution propose également une alternative de débrayage de l'un des trois moteurs. L'hélicoptère Super-Frelon de la demanderesse possédait également trois turbomoteurs identiques.

Le document US3963372 propose une solution de gestion de la puissance et de contrôle des moteurs pour des hélicoptères trimoteur.

Pour pallier le problème des moteurs conçus de manière surdimensionnée, une installation des moteurs à puissances maximales inégales, dans le cas des aéronefs bimoteur, a déjà été envisagée par le passé. C'est le cas du document WO2012/059671 qui propose deux moteurs à puissances maximales inégales.

La présente invention a alors pour objet l'optimisation de la régulation d'une installation motrice selon une configuration innovante. En particulier, la présente invention permet de gérer en permanence et en fonction du besoin de puissance de l'aéronef la répartition de puissance entre les moteurs principaux et chaque moteur secondaire de cette installation motrice selon les sollicitations des moteurs principaux.

La présente invention a ainsi pour objet un procédé de régulation d'une installation motrice comportant au moins trois moteurs pour un aéronef à voilure tournante.

Ce procédé de régulation d'une installation motrice pour un aéronef est destiné à une installation motrice comprenant un premier groupe moteur, un second groupes moteurs et une boîte de transmission principale de puissance, les deux groupes moteurs entrainant mécaniquement la boîte de transmission principale de puissance afin de mettre en rotation un arbre principal de sortie de la boîte de transmission principale de puissance. L'arbre principal de sortie est solidaire en rotation d'un rotor principal de l'aéronef qui a une fréquence de rotation *NR.* Un premier groupe moteur comprend au moins deux moteurs principaux et un second groupe moteur comprend au moins un moteur secondaire.

En outre, chaque moteur principal et chaque moteur secondaire, généralement des turbomoteurs munis d'un générateur de gaz et d'une turbine libre, disposent d'une puissance maximale qui est différente selon la phase de vol et les conditions de fonctionnement de ces moteurs. Ainsi, chaque moteur principal fournit une puissance principale maximale *W_{Max1}* et chaque moteur secondaire fournit une puissance secondaire maximale *W_{Max2}.* Les valeurs de ces puissances principale et secondaire maximales *W_{Max1}, W_{Max2}* sont fournies par le fabricant du moteur généralement sous la forme de courbes en fonction de la pression et la température de l'air à l'extérieur de l'aéronef.

Par exemple, une puissance mécanique continue *PMC* est disponible de façon continue au cours du vol de l'aéronef et une puissance mécanique de décollage *PMD* plus importante est disponible pendant un temps limité pour la phase de décollage de l'aéronef.

De plus, afin de compenser une panne d'un moteur, chaque moteur restant opérationnel est amené à fonctionner selon un mode spécial désigné par l'acronyme *OEI* pour la désignation en langue anglaise « One Engine Inoperative ». Ce mode spécial permet à chaque moteur de développer des puissances mécaniques de sécurité plus importantes que la puissance mécanique continue *PMC* avec des contraintes de temps de fonctionnement.

Ce procédé de régulation d'une installation motrice selon l'invention comporte plusieurs étapes au cours desquelles,
- on détermine une première consigne *NR** de la fréquence de rotation *NR* du rotor principal de l'aéronef,
- on régule le fonctionnement de chaque moteur principal selon la première consigne *NR** de la fréquence de rotation *NR* du rotor principal de l'aéronef,
- on détermine une puissance de vol *Wᵥₒₗ* nécessaire pour le vol de l'aéronef, cette puissance de vol *Wᵥₒₗ* étant fournie par l'installation motrice,
- on détermine une deuxième consigne *W₂** de puissance à fournir par le second groupe moteur, afin que chaque moteur secondaire fonctionne uniquement lorsque ladite puissance de vol *Wᵥₒₗ* est supérieure à la somme desdites puissances principales maximales *W_{Max1}* de chaque moteur principal, et
- on régule le fonctionnement de chaque moteur secondaire selon la deuxième consigne *W₂** de puissance.

Dans le cadre des aéronefs à voilures tournantes, la première consigne *NR** de la fréquence de rotation *NR* du rotor principal de l'aéronef est traditionnellement une valeur fixe. On détermine alors cette première consigne *NR** fixe au cours du développement de l'aéronef, après des études et essais afin de prendre en compte de nombreux critères, tels que la masse embarquée, la vitesse de déplacement de l'aéronef, l'aérodynamisme ou encore le type de mission.

Toutefois, cette première consigne *NR** de la fréquence de rotation *NR* du rotor principal de l'aéronef peut également être variable, sur une plage généralement prédéfinie, par exemple de l'ordre de 15 à 20% d'une fréquence nominale de rotation de ce rotor principal. Cette variation de la première consigne *NR** permet par exemple la réduction du bruit de l'aéronef ou bien l'amélioration de ses performances aérodynamiques, en particulier pour des vitesses d'avancement élevées.

On détermine alors cette première consigne *NR** variable en permanence et au cours du vol de l'aéronef. Cette première consigne *NR** variable peut être déterminée par un calculateur embarqué dans l'aéronef, tel qu'un système de contrôle automatique de vol désigné par l'acronyme « AFCS » pour la désignation en langue anglaise « Automatic Flight Control System ». Cette première consigne *NR** variable peut notamment être déterminée en fonction, entre autres, des actions sur les commandes de vol, des caractéristiques de vol de l'aéronef et de sa phase de vol.

On régule alors le fonctionnement du premier groupe moteur afin de maitriser la fréquence de rotation *NR* du rotor principal de l'aéronef. Cette fréquence de rotation *NR* est alors sensiblement égale à la première consigne *NR*,* mais peut tout de même varier légèrement autour de cette première consigne *NR** au cours de la régulation dans des phases dynamiques.

On régule par exemple le fonctionnement de chaque moteur principal de ce premier groupe moteur selon une boucle de régulation proportionnelle intégrale, éventuellement par l'intermédiaire d'un premier dispositif de régulation. Ce premier dispositif de régulation assure la régulation de la fréquence de rotation de la turbine libre de chaque moteur principal, chaque moteur principal étant de préférence un turbomoteur géré par un calculateur principal de type FADEC. La turbine libre de chaque moteur principal entraine la boîte de transmission principale de puissance et permet la mise en rotation au moins de l'arbre principal de sortie et, par suite, celle du rotor principal de l'aéronef à voilure tournante à la fréquence de rotation *NR.*

On détermine ensuite une deuxième consigne *W₂** de puissance à fournir par le second groupe moteur, afin que ce second groupe moteur fonctionne uniquement lorsque la puissance de vol *Wᵥₒₗ* est supérieure à la puissance maximale que peut fournir le premier groupe moteur.

La puissance de vol *Wᵥₒₗ* de l'aéronef est formée principalement par la puissance nécessaire au vol de l'aéronef afin de réaliser les manoeuvres et les déplacements demandés par le pilote. Cette puissance nécessaire au vol est répartie entre le rotor principal et le rotor anticouple.

Il est à noter que cette puissance de vol *Wᵥₒₗ* de l'aéronef contient également une puissance accessoire pour alimenter des équipements de l'aéronef. Cette puissance accessoire est utilisée par exemple pour alimenter la climatisation de la cabine de l'aéronef, les équipements électriques de l'aéronef tels que l'avionique et des alternateurs ou encore les équipements hydrauliques de l'aéronef. Cette puissance accessoire, composée principalement d'une puissance électrique et d'une puissance hydraulique, peut être déterminée de façon connue.

On régule enfin le fonctionnement du second groupe moteur afin qu'il fournisse une seconde puissance *W₂*. Par suite, cette seconde puissance *W₂* est sensiblement égale à la deuxième consigne *W₂**, mais peut tout de même varier légèrement autour de cette deuxième consigne *W₂** au cours de la régulation dans des phases dynamiques.

On régule par exemple le fonctionnement de chaque moteur secondaire de ce second groupe moteur selon une boucle de régulation proportionnelle ou bien une boucle de régulation proportionnelle intégrale, éventuellement par l'intermédiaire d'un deuxième dispositif de régulation. La puissance fournie par chaque moteur secondaire est ainsi ajustée sans augmenter la charge de travail du pilote par rapport à un aéronef bimoteur d'un point de vue pilotage afin de maintenir les performances de l'aéronef. Ce deuxième dispositif de régulation assure le contrôle du couple de chaque moteur secondaire afin que le second groupe moteur fournisse la seconde puissance *W₂* alors que la vitesse de rotation de chaque moteur secondaire est imposée par la régulation de chaque moteur principal selon la première consigne *NR*.*

De plus, le deuxième dispositif de régulation comporte autant de calculateurs secondaires que de moteurs secondaires, chaque calculateur secondaire étant relié à un seul moteur secondaire, ces calculateurs secondaires étant reliés entre eux afin de permettre la régulation des moteurs secondaires. Chaque calculateur peut être par exemple de type *FADEC.*

Selon ce procédé de régulation d'une installation motrice, chaque moteur secondaire fonctionne uniquement lorsque ladite puissance de vol *Wᵥₒₗ* est supérieure à la somme des puissances principales maximales *W_{Max1}* de chaque moteur principal. Ainsi, chaque moteur secondaire est utilisé uniquement lorsque le premier groupe moteur ne peut fournir seul la puissance de vol *Wᵥₒₗ* nécessaire au vol de l'aéronef tout en conservant ses performances.

Plusieurs cas sont alors à prendre en compte selon la comparaison de la puissance de vol *Wᵥₒₗ* et de la puissance maximale que peut fournir le premier groupe moteur.

Tout d'abord, selon un premier cas, tant qu'une première somme des puissances principales maximales *W_{Max1}* de chaque moteur principal est supérieure ou égale à la puissance de vol *Wᵥₒₗ,* la deuxième consigne *W₂** est nulle. De la sorte, le premier groupe moteur fournit seul, sans l'aide du second groupe moteur, cette puissance de vol *Wᵥₒₗ* nécessaire au vol de l'aéronef.

Ce premier cas correspond en fait à des phases de vol de l'aéronef peu consommatrices de puissance. Il s'agit par exemple des phases de vol en descente ou bien en palier à faibles vitesses et/ou à faible masse embarquée.

En revanche, lorsque cette première somme des puissances principales maximales *W_{Max1}* de chaque moteur principal est inférieure à la puissance de vol *Wᵥₒₗ*, le second groupe moteur doit fournir une puissance secondaire afin que l'installation motrice fournisse la puissance de vol *Wᵥₒₗ.* La deuxième consigne *W₂** est alors non nulle. Cependant, deux autres cas sont alors à distinguer et sont désignés ci-après deuxième et troisième cas.

Selon un deuxième cas, lorsque la différence entre la puissance de vol *Wᵥₒₗ* et la première somme des puissances principales maximales *W_{Max1}* de chaque moteur principal est positive et inférieure à une seconde somme des puissances secondaires maximales *W_{Max2}* de chaque moteur secondaire, la deuxième consigne *W₂** est égale à cette différence entre la puissance de vol *Wᵥₒₗ* et la première somme des puissances principales maximales *W_{Max1}.*

Chaque moteur secondaire est alors sollicité, voire fortement sollicité pour fournir un complément de puissance nécessaire afin de garantir les performances de l'aéronef. Ce deuxième cas correspond à des phases de vol de l'aéronef fortement consommatrices de puissance. Il s'agit par exemple des phases de décollage, d'atterrissage, de vol stationnaire, de vol en montée ou bien en palier à grandes vitesses et/ou à masse embarquée importante.

Selon un troisième cas, lorsque cette différence entre la puissance de vol *Wᵥₒₗ* et la première somme des puissances principales maximales *W_{Max1}* est supérieure à la seconde somme des puissances secondaires maximales *W_{Max2},* la deuxième consigne *W₂** est égale à cette seconde somme des puissances secondaires maximales *W_{Max2}*.

Chaque moteur secondaire est alors sollicité au maximum pour fournir un complément de puissance égale à la puissance secondaire maximale *W_{Max2}.* Les moteurs principaux fournissent également leurs puissances principales maximales *W_{Max1}.* Ce troisième cas est toutefois exceptionnel, l'installation motrice fournissant la puissance maximale disponible pour un fonctionnement normal des moteurs principaux et secondaires. Le pilote ne dispose alors d'aucune marge de puissance supplémentaire pour un fonctionnement normal des moteurs. Ce troisième cas correspond par exemple à une manoeuvre brutale d'évitement d'un obstacle ou bien à un cas de panne d'un moteur.

Ces trois cas peuvent alors se résumer selon la formule *W₂* = MIN*{∑*W*_{*Max*2}; *MAX*[0; *Wᵥₒₗ -* ∑*W*_{*Max*1}]}*.*

Avantageusement, chaque moteur secondaire n'étant pas utilisé de façon continue, mais uniquement en cas de besoin, lors de phases de vol fortement consommatrices de puissance, l'usure de chaque moteur secondaire est réduite, permettant ainsi de réduire d'une part son coût de maintenance et d'autre part le temps d'immobilisation de l'aéronef.

De préférence, le premier groupe moteur comporte deux moteurs principaux identiques alors que le second groupe moteur comporte un seul moteur secondaire différent des moteurs principaux. Ce moteur secondaire est par exemple moins important en masse et en dimensions que les moteurs principaux et fournit une puissance maximale inférieure à celle de ces moteurs principaux.

Par ailleurs, le premier groupe moteur et le second groupe moteur fournissent conjointement une puissance de sortie *Ws.* Cette puissance de sortie *Ws* est égale à la somme de la seconde puissance *W₂* fournie par le second groupe moteur et d'une première puissance *W₁* fournie par le premier groupe moteur, telle que *Ws = W*₁ + *W*₂.

Selon le procédé de régulation d'une installation motrice, on peut déterminer une puissance d'anticipation de vol *Ws** qui correspond à une puissance potentiellement nécessaire au vol de l'aéronef et qui doit être fournie par l'installation motrice, et donc conjointement par le premier groupe moteur et le second groupe moteur. Cette puissance d'anticipation de vol *Ws** est estimée généralement en fonction de la position de la commande de pas collectif des pales du rotor principal de l'aéronef, de la fréquence de rotation *NR* de ce rotor principal et de la vitesse d'avancement de l'aéronef.

Ensuite, on détermine une troisième consigne *W₁** de la puissance à fournir par le premier groupe moteur, telle que *Ws** = *W*₁*** + *W*₂**.*

Enfin, on peut utiliser cette troisième consigne *W₁** de puissance afin que le premier groupe moteur et le second groupe moteur anticipent le besoin de puissance de l'aéronef et fournissent conjointement la puissance d'anticipation de vol *Ws*.*

La puissance d'anticipation de vol *Ws** peut être déterminée par un moyen d'anticipation en prenant en compte par anticipation des besoins en couple et/ou en puissance au niveau du rotor principal de l'aéronef.

Cette puissance d'anticipation de vol *Ws** peut également être déterminée selon les besoins de performance de l'aéronef notamment à partir d'informations relatives à l'état de vol et aux situations de vol de l'aéronef ainsi qu'en fonction des commandes de vol exécutées par un pilote de cet aéronef. Par exemple, le moyen d'anticipation prend en compte la première consigne *NR** ainsi que l'accélération ou bien la décélération du rotor principal.

Ce moyen d'anticipation peut être intégré à un moyen de calcul présent dans l'aéronef ou bien directement à l'installation avionique de l'aéronef.

En outre, dans le cas particulier d'une phase de vol donnée de cet aéronef et comme la régulation de la fréquence de rotation *NR* du rotor principal est assurée par le premier groupe moteur, la puissance d'anticipation de vol *Ws** peut être constante. Le deuxième dispositif de régulation permet alors d'ajuster la répartition de cette puissance d'anticipation de vol *Ws** nécessaire entre chaque groupe moteur.

Le second groupe moteur est ainsi piloté uniquement en puissance, selon la deuxième consigne *W₂** alors que le premier groupe moteur est régulé afin de maîtriser prioritairement la fréquence de rotation *NR* du rotor principal de l'aéronef. La puissance fournie par chaque groupe moteur peut ainsi être avantageusement optimisée en fonction des besoins et sans dégrader les performances de l'installation motrice et en particulier en respectant la première consigne *NR*.* La répartition de la puissance d'anticipation de vol *Ws** entre les deux groupes moteurs, c'est-à-dire entre la deuxième consigne *W₂** et la troisième consigne *W₁** de puissance, peut alors être réalisée par l'intermédiaire du moyen de calcul selon différents critères de fonctionnement de l'installation motrice.

Par ailleurs, il est à noter que la puissance de vol *Wᵥₒₗ* varie avec les conditions de vol de l'aéronef, et notamment les conditions atmosphériques, avec les caractéristiques de l'aéronef et avec la phase de vol de l'aéronef.

Pour détecter ces phases de vol, on peut utiliser un algorithme de sélection afin de déterminer de façon automatique la phase de vol de l'aéronef.

Cet algorithme utilise par exemple les valeurs de la vitesse horizontale *Vh* et la vitesse verticale *Vz* de l'aéronef déterminées par des capteurs de vitesse présents dans l'aéronef.

Cet algorithme peut également utiliser des données provenant des commandes de vol de l'aéronef. En effet, des combinaisons particulières des positions des commandes de vol correspondent à des phases de vol particulières et distinctes de l'aéronef. Il est par exemple connu d'utiliser les positions du levier de pas collectif (commande en pas collectif des pales du rotor principal) et du palonnier (commande en pas collectif des pales du rotor anticouple) pour déterminer la phase de vol de l'aéronef.

Cet algorithme peut enfin utiliser des données d'attitude et d'accélération de l'aéronef selon chacun de ces axes. Ces données sont par exemple fournies par une centrale inertielle ou bien par un dispositif de type AHRS pour l'expression en langue anglaise « Attitude and Heading Reference System ».

Pour chaque phase de vol de l'aéronef, des courbes de performances spécifiques permettent de déterminer la puissance nécessaire pour le vol de l'aéronef, l'installation motrice devant fournir la puissance de vol *Wᵥₒₗ* égale à la somme de cette puissance nécessaire pour le vol et de la puissance accessoire pour réaliser cette phase de vol. Selon la phase de vol, ces courbes de performances sont constituées d'abaques en fonction des conditions atmosphériques, notamment la pression et la température de l'air à l'extérieur de l'aéronef, et/ou en fonction de la masse totale de l'aéronef.

Ces courbes de performances prennent généralement en compte les caractéristiques de l'aéronef, telles que les caractéristiques aérodynamiques. Par exemple, le type d'entrée d'air et de tuyère associées aux moteurs, influant sur le fonctionnement des moteurs par les pertes de charge générées, peut être pris en compte dans les courbes de performances. De même, lors de l'utilisation d'un filtre au niveau de chaque entrée d'air dégradant les performances d'un moteur, des courbes de performances particulières, prenant en compte ce filtre, doivent être utilisées.

Par ailleurs, le régime de rotation et le rendement du rotor principal de l'aéronef jouant sur la puissance nécessaire peuvent être utilisés pour ajuster la puissance nécessaire au vol par l'intermédiaire de courbes de performances prenant en compte notamment la fréquence *NR* de rotation du rotor principal.

En cas de panne d'au moins un moteur principal, on peut continuer de réguler le fonctionnement de chaque moteur secondaire selon la deuxième consigne *W₂** de puissance. Ainsi, chaque moteur secondaire fonctionne uniquement lorsque la puissance de vol *Wᵥₒₗ* est supérieure à la somme des puissances principales maximales *W_{Max1}* fournies par chaque moteur principal opérationnel.

Par ailleurs, lorsque la deuxième consigne *W₂** est nulle, chaque moteur secondaire est tout de même « allumé » et fonctionne à un régime de rotation faible afin de pouvoir être activé rapidement en cas de panne d'un moteur principal.

Cependant, en cas de panne d'au moins un moteur principal, la régulation de chaque moteur secondaire peut également être différente afin de répartir différemment la puissance de l'installation motrice entre chaque moteur principal non en panne et chaque moteur secondaire.

Par exemple, on peut utiliser chaque moteur secondaire fournissant sa puissance secondaire maximale *W_{Max2}.* Ainsi, le second groupe moteur fournit une seconde puissance *W₂* maximale afin de limiter la première puissance *W₁* fournie par le premier groupe moteur. On peut ainsi réduire, voire éviter l'utilisation des modes de fonctionnement *OEI* de chaque moteur principal encore opérationnel.

On peut aussi réguler le fonctionnement de chaque moteur secondaire selon la première consigne *NR** de la fréquence de rotation *NR* du rotor principal, afin de garantir le respect de cette première consigne *NR*.* Cette régulation peut être réalisée en mode proportionnel ou bien en mode proportionnel intégral.

La présente invention a aussi pour objet une installation motrice destinée à un aéronef et comprenant un premier groupe moteur, un second groupes moteurs et une boîte de transmission principale de puissance. Les deux groupes moteurs entrainent mécaniquement la boîte de transmission principale de puissance afin de mettre en rotation au moins un arbre principal de sortie de cette boîte de transmission principale de puissance. Cet arbre principal de sortie est solidaire en rotation d'un rotor principal de l'aéronef à une fréquence de rotation *NR.*

Un premier groupe moteur comprend au moins deux moteurs principaux et un premier dispositif de régulation. Ce premier dispositif de régulation est configuré pour réguler le fonctionnement de chaque moteur principal selon une première consigne *NR** de la fréquence de rotation *NR* du rotor principal de l'aéronef.

Un second groupe moteur comprend au moins un moteur secondaire et un deuxième dispositif de régulation. Ce deuxième dispositif de régulation est configuré pour réguler la puissance fournie par chaque moteur secondaire selon une deuxième consigne *W₂** de puissance à fournir par ce second groupe moteur.

L'installation motrice doit fournir une puissance de vol *Wᵥₒₗ* nécessaire pour le vol de l'aéronef. En outre, chaque moteur principal peut fournir une puissance principale maximale *W_{Max1}* et chaque moteur secondaire peut fournir une puissance secondaire maximale *W_{Max2}.*

Un moyen de calcul est configuré pour déterminer la deuxième consigne *W₂** afin que chaque moteur secondaire fonctionne uniquement lorsque le premier groupe moteur ne peut fournir seul la puissance de vol *Wᵥₒₗ* nécessaire au vol de l'aéronef, tel que précédemment décrit. Ce moyen de calcul peut être situé dans l'installation motrice ou bien dans l'aéronef.

L'installation motrice peut également comporter un moyen d'anticipation configuré pour déterminer la puissance d'anticipation de vol *Ws** nécessaire au vol de l'aéronef et qui doit être fournie conjointement par les premier et second groupes moteurs. Une troisième consigne *W₁** de la puissance à fournir par le premier groupe moteur est ainsi déterminée telle que *Ws** = *W*₁* + *W*₂**.*

Enfin, cette troisième consigne *W₁** de puissance peut alors être utilisée afin que le premier groupe moteur et le second groupe moteur anticipent le besoin de puissance de l'aéronef et fournissent conjointement la puissance d'anticipation de vol *Ws*.*

Le premier groupe moteur comporte de préférence deux moteurs principaux identiques et le second groupe moteur comporte un seul moteur secondaire différent des moteurs principaux.

En cas de panne d'au moins un moteur principal, le deuxième dispositif de régulation peut réguler le fonctionnement de chaque moteur secondaire selon la première consigne *NR** de la fréquence de rotation *NR* du rotor principal en mode proportionnel ou bien en mode proportionnel intégral. Le deuxième dispositif de régulation peut également réguler le fonctionnement de chaque moteur secondaire selon la deuxième consigne *W₂** de puissance telle que précédemment déterminée ou bien en délivrant la puissance secondaire maximale *W_{Max2}* disponible de chaque moteur secondaire.

La présente invention a aussi pour objet un aéronef à voilure tournante comportant au moins un rotor principal, une installation motrice telle que précédemment décrite et une installation avionique, l'installation motrice entrainant en rotation le rotor principal. Le moyen de calcul peut être situé dans l'installation avionique de l'aéronef.

L'invention et ses avantages apparaîtront avec plus de détails dans le cadre de la description qui suit avec des exemples de réalisations donnés à titre illustratif en référence aux figures annexées qui représentent :
- la figure 1, un aéronef à voilure tournante équipé d'un dispositif de régulation d'une installation motrice selon l'invention, et
- la figure 2, un schéma synoptique du procédé de régulation d'une installation motrice selon l'invention, et
- les figures 3 à 5, des courbes de performances de l'aéronef.

Les éléments présents dans plusieurs figures distinctes sont affectés d'une seule et même référence.

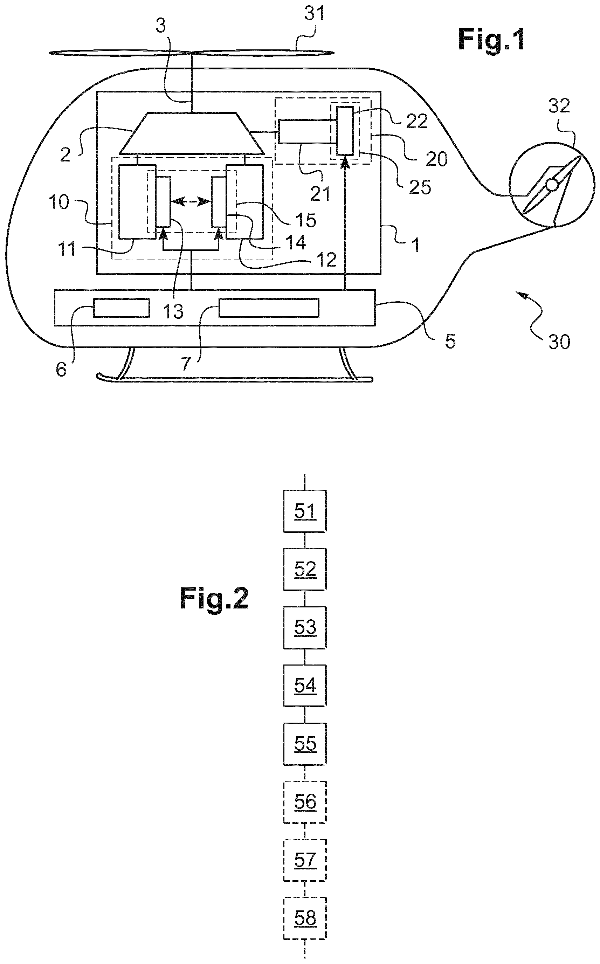

La figure 1 représente un aéronef 30 à voilure tournante comportant un rotor principal 31, un rotor arrière 32, une installation motrice 1 et une installation avionique 5. L'installation motrice 1 comporte un premier groupe moteur 10, un second groupe moteur 20 et une boîte de transmission principale de puissance 2. Les deux groupes moteurs 10,20 entraînent mécaniquement la boîte de transmission principale de puissance 2 afin de mettre en rotation un arbre principal de sortie 3 de cette boîte de transmission principale de puissance 2. Cet arbre principal de sortie 3 est solidaire en rotation avec le rotor principal 31 qui tourne à une fréquence de rotation *NR* afin d'assurer la sustentation, voire la propulsion de l'aéronef 30.

Le rotor arrière 32 peut également être entrainé en rotation par la boite de transmission mécanique de puissance 2 par l'intermédiaire d'un arbre secondaire de sortie de cette boîte de transmission principale de puissance 2.

Le premier groupe moteur 10 comprend deux moteurs principaux 11,12 identiques et un premier dispositif de régulation 15. Ce premier dispositif de régulation 15 comporte deux calculateurs principaux 13,14, chaque calculateur principal 13,14 étant relié à un seul moteur principal 11,12. Les calculateurs principaux 13,14 sont également reliés entre eux. Chaque moteur principal 11,12 fournit une puissance principale maximale *W_{Max1}.*

Le second groupe moteur 20 comprend un moteur secondaire 21 et un deuxième dispositif de régulation 25. Ce deuxième dispositif de régulation 25 comporte un calculateur secondaire 22 relié au moteur secondaire 21. Le moteur secondaire 21 est différent des moteurs principaux 11,12. Ce moteur secondaire 21 est moins important en masse et en dimensions que les moteurs principaux 11,12 et fournit une puissance secondaire maximale *W_{Max2}* inférieure à chaque puissance principale maximale *W_{Max1}* de ces moteurs principaux 11,12.

Les moteurs principaux 11,12 ainsi que le moteur secondaire 21 sont des turbomoteurs comportant un générateur de gaz et une turbine libre entrainant la boîte de transmission principale de puissance 2.

Les moteurs principaux 11,12 et le moteur secondaire 21 peuvent fournir des puissances principales et secondaire maximales *W_{Max1}, W_{Max2}* qui sont différentes selon la phase de vol et les conditions de fonctionnement de ces moteurs, notamment une puissance mécanique continue *PMC,* une puissance mécanique de décollage *PMD* et des puissances mécaniques de sécurité *OEI.*

L'installation avionique 5 comprend un moyen de calcul 6 et un moyen d'anticipation 7.

La figure 2 représente un schéma synoptique du procédé de régulation d'une installation motrice selon l'invention. Ce procédé de régulation d'une installation motrice comporte cinq étapes principales.

Au cours d'une première étape 51, on détermine une première consigne *NR** de la fréquence de rotation *NR* du rotor principal 31. Cette première consigne *NR** peut être une valeur fixe déterminée au cours du développement de l'aéronef 30 ou bien une valeur variable déterminée alors en permanence, au cours du vol de l'aéronef 30 par le moyen de calcul 6.

Au cours d'une deuxième étape 52, on régule le fonctionnement de chaque moteur principal 11,12 selon la première consigne *NR** de la fréquence de rotation *NR* du rotor principal 31 par l'intermédiaire du premier dispositif de régulation 15.

Ainsi, le premier groupe moteur 10 permet, grâce au premier dispositif de régulation 15, de maitriser la fréquence de rotation *NR* du rotor principal 31, cette fréquence de rotation *NR* étant sensiblement égale à la première consigne *NR*.*

Ce premier dispositif de régulation 15 assure par exemple la régulation des deux moteurs principaux 11,12 selon une boucle de régulation proportionnelle intégrale. Ces deux moteurs principaux 11,12 étant identiques, leur fonctionnement est alors symétrique, chaque moteur principal 11,12 contribuant à parts égales à l'entrainement du rotor principal 31 par l'intermédiaire de l'arbre principal de sortie 3.

Au cours d'une troisième étape 53, on détermine une puissance de vol *Wᵥₒₗ* nécessaire pour le vol de l'aéronef 30. Cette puissance de vol *Wᵥₒₗ* est fournie par l'installation motrice 1 et se répartit entre le rotor principal 31, le rotor arrière 32 et les équipements de l'aéronef 30.

Cette puissance de vol *Wᵥₒₗ* est donc égale à la somme d'une puissance accessoire alimentant ces équipements et une puissance nécessaire au vol de l'aéronef 30 déterminée par l'intermédiaire des courbes de performances de l'aéronef 30. Ces courbes de performances sont spécifiques pour chaque phase de vol de l'aéronef 30.

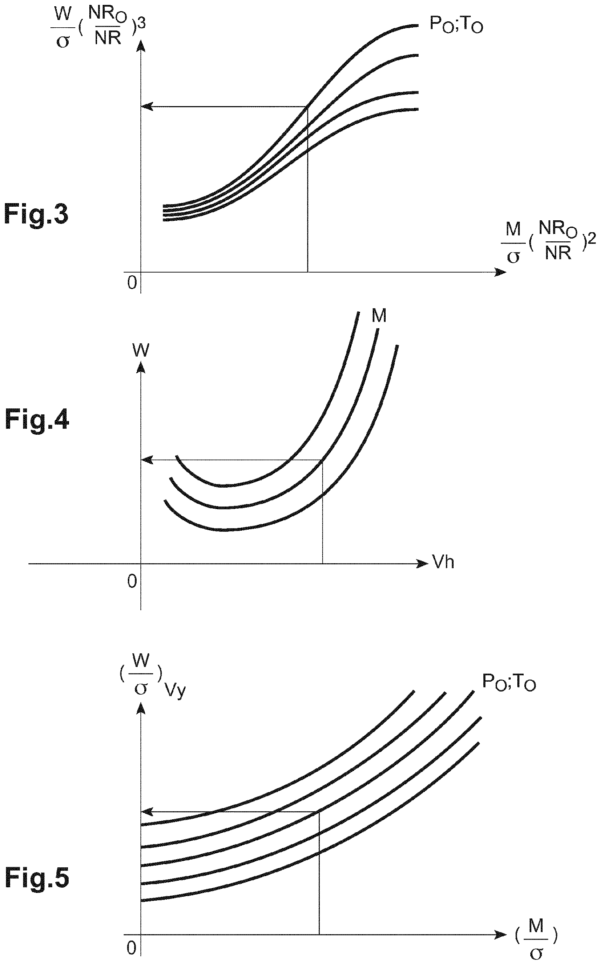

Des exemples de telles courbes de performances sont représentés sur les figures 3 à 5.

Sur la figure 3 est représentée une première courbe de performances d'un vol stationnaire de l'aéronef 30. Cette première courbe de performances d'un vol stationnaire est constituée d'abaques en fonction des conditions atmosphériques, notamment la pression *P₀* et la température *T₀* de l'air à l'extérieur de l'aéronef 30.

Sur la figure 4 est représentée une deuxième courbe de performances d'un vol en palier de l'aéronef 30. Cette deuxième courbe de performances d'un vol en palier est constituée d'abaques en fonction de la masse totale M de l'aéronef 30.

Sur la figure 5 est représentée une troisième courbe de performances d'un vol en montée de l'aéronef 30. Cette troisième courbe de performances d'un vol en montée est constituée d'abaques en fonction des conditions atmosphériques, notamment la pression *P₀* et la température *T₀* de l'air à l'extérieur de l'aéronef 30.

D'autres courbes de performances non représentées existent pour d'autres phases de vol et notamment les phases de décollage et d'atterrissage de l'aéronef 30.

Au cours d'une quatrième étape 54, on détermine une deuxième consigne *W₂** de puissance à fournir par le second groupe moteur 20.

On détermine cette deuxième consigne *W₂** par l'intermédiaire du moyen de calcul 6 selon la puissance de vol *Wᵥₒₗ* de l'aéronef 30 et les puissances principales maximales *W_{Max1}* de chaque moteur principal 11,12 du premier groupe moteur 10 afin que le moteur secondaire 21 fonctionne uniquement lorsque le premier groupe moteur 10 ne peut fournir seul la puissance de vol *Wᵥₒₗ* nécessaire au vol de l'aéronef 30.

Ainsi, tant qu'une première somme des puissances principales maximales *W_{Max1}* de chaque moteur principal 11,12 est supérieure ou égale à la puissance de vol *Wᵥₒₗ*, la deuxième consigne *W₂** est nulle. De la sorte, le premier groupe moteur 10 fournit seul, sans l'aide du second groupe moteur 20, cette puissance de vol *Wᵥₒₗ* nécessaire au vol de l'aéronef 30. Ce premier cas correspond en fait à des phases de vol de l'aéronef 30 peu consommatrices de puissance.

En outre, dans un deuxième cas, lorsque la différence entre la puissance de vol *Wᵥₒₗ* et la première somme des puissances principales maximales *W_{Max1}* de chaque moteur principal 11,12 est positive et inférieure à une seconde somme des puissances secondaires maximales *W_{Max2}* du moteur secondaire 21, la deuxième consigne *W₂** est égale à cette différence entre la puissance de vol *Wᵥₒₗ* et la première somme des puissances principales maximales *W_{Max1}.*

Par contre, dans un troisième cas, lorsque cette différence entre la puissance de vol *Wᵥₒₗ* et la première somme des puissances principales maximales *W_{Max1}* est supérieure à la seconde somme des puissances secondaires maximales *W_{Max2},* la deuxième consigne *W₂** est égale à cette seconde somme des puissances secondaires maximales *W_{Max2}*.

Le moteur secondaire 21 est alors sollicité, voire fortement sollicité pour fournir un complément de puissance nécessaire afin d'assurer la phase de vol de l'aéronef 30. Cela correspond à des phases de vol de l'aéronef 30 fortement consommatrices de puissance.

Au cours d'une cinquième étape 55, on régule le fonctionnement du moteur secondaire 21 selon la deuxième consigne *W₂** de puissance par l'intermédiaire du deuxième dispositif de régulation 25. Le second groupe moteur 21 fournit ainsi une seconde puissance *W₂* sensiblement égale à la deuxième consigne *W₂**.

Le fonctionnement du moteur secondaire 21 est ainsi optimisé en fonction du besoin de puissance au niveau des moteurs principaux 11,12. Le procédé de régulation d'une installation motrice permet avantageusement de gérer, en permanence et en fonction du besoin de puissance de l'aéronef 30 et des sollicitations des moteurs principaux 11,12, la répartition de puissance entre les moteurs principaux 11,12 et le moteur secondaire 21 de l'installation motrice 10.

Le procédé de régulation d'une installation motrice peut également comporter trois étapes supplémentaires.

Au cours d'une sixième étape 56, on détermine une puissance d'anticipation de vol *Ws** par le moyen d'anticipation 7. Cette puissance d'anticipation de vol *Ws** correspond à une puissance potentiellement nécessaire au vol de l'aéronef 30 et qui doit être fournie conjointement par les moteurs principaux 11,12 et le moteur secondaire 21.

Au cours d'une septième étape 57, on détermine par le moyen de calcul 6 une troisième consigne *W₁** de la puissance que doit fournir le premier groupe moteur 10, telle que *Ws** = *W*₁* + *W*₂**.*

Au cours d'une huitième étape 58, on utilise la troisième consigne *W₁** de puissance afin que le premier groupe moteur 10 et le second groupe moteur 20 anticipent un besoin de puissance de l'aéronef 30 et fournissent conjointement la puissance d'anticipation de vol *Ws*.*

Le premier groupe moteur 10 et le second groupe moteur 20 fournissent alors conjointement une puissance de sortie *Ws* qui est égale à la somme de la seconde puissance *W₂* fournie par le second groupe moteur 20 et d'une première puissance *W₁* fournie par le premier groupe moteur 10, telle que *Ws = W*₁ + *W*₂.

La première puissance *W₁* est alors sensiblement égale à la troisième consigne *W₁** et la puissance de sortie *Ws* est sensiblement égale à la puissance d'anticipation de vol *Ws*.*

Par ailleurs, en cas de panne d'un moteur principal 11,12, on peut continuer de réguler le fonctionnement du moteur secondaire 21 selon la deuxième consigne *W₂** de puissance. Ainsi, le moteur secondaire 21 fonctionne uniquement lorsque la puissance de vol *Wᵥₒₗ* est supérieure à la puissance principale maximale *W_{Max1}* fournie par le moteur principal 11,12 opérationnel.

Cependant, en cas de panne d'un moteur principal 11,12, la régulation du moteur secondaire 21 peut également être différente afin de répartir différemment la puissance fournie par l'installation motrice 1 entre le moteur principal 11,12 non en panne et le moteur secondaire 21.

Par exemple, on peut utiliser le moteur secondaire 21 fournissant sa puissance secondaire maximale *W_{Max2}.* Le second groupe moteur 20 fournit alors une seconde puissance *W₂* maximale afin de limiter la première puissance *W₁* fournie par le premier groupe moteur 10. On peut ainsi réduire, voire éviter l'utilisation des modes de fonctionnement *OEI* de chaque moteur principal 11,12 et des puissances mécaniques de sécurité associées.

On peut aussi réguler le fonctionnement du moteur secondaire 21 selon la première consigne *NR** de la fréquence de rotation *NR* du rotor principal 31, afin de garantir le respect de cette première consigne *NR*.* Cette régulation peut être réalisée en mode proportionnel ou bien en mode proportionnel intégral.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de régulation d'une installation motrice (1) d'un aéronef à voilure tournante (30), ladite installation motrice (1) comprenant un premier groupe moteur (10), un second groupe moteur (20) et une boîte de transmission principale de puissance (2), les deux groupes moteurs (10,20) entrainant mécaniquement ladite boîte de transmission principale de puissance (2) afin de mettre en rotation un arbre principal de sortie (3) de ladite boîte de transmission principale de puissance (2), ledit arbre principal de sortie (3) étant solidaire en rotation d'un rotor principal (31) dudit aéronef (30) ayant une fréquence de rotation *NR,* ledit premier groupe moteur (10) comprenant au moins deux moteurs principaux (11,12), ledit second groupe moteur (20) comprenant au moins un moteur secondaire (21), chaque moteur principal (11,12) pouvant fournir une puissance principale maximale *W_{Max1},* chaque moteur secondaire (21) pouvant fournir une puissance secondaire maximale *W_{Max2},*
au cours duquel,
- on détermine une première consigne *NR** de ladite fréquence de rotation *NR* dudit rotor principal (31),
- on régule le fonctionnement de chaque moteur principal (11,12) selon ladite première consigne *NR** de ladite fréquence de rotation *NR,*
- on détermine une puissance de vol *Wᵥₒₗ* nécessaire pour le vol dudit aéronef (30), ladite puissance de vol *Wᵥₒₗ* étant fournie par ladite installation motrice (1),
- on détermine une deuxième consigne *W₂** de puissance à fournir par ledit second groupe moteur (20), afin que chaque moteur secondaire (21) fonctionne uniquement lorsque ladite puissance de vol *Wᵥₒₗ* est supérieure à la somme desdites puissances principales maximales *W_{Max1}* de chaque moteur principal (11,12), et
- on régule le fonctionnement de chaque moteur secondaire (21) selon ladite deuxième consigne *W₂** de puissance.

2. Procédé de régulation d'une installation motrice (1) selon la revendication 1,
**caractérisé en ce que**
- on détermine une puissance d'anticipation de vol *Ws** nécessaire au vol dudit aéronef (30) et que doivent fournir conjointement ledit premier groupe moteur (10) et ledit second groupe moteur (20),
- on détermine une troisième consigne *W₁** de la puissance à fournir par ledit premier groupe moteur (10), telle que *Ws** = *W*₁*** + *W*₂***, et
- on utilise ladite troisième consigne *W₁** de puissance afin que ledit premier groupe moteur (10) et ledit second groupe moteur (20) anticipent un besoin de puissance dudit aéronef (30) et fournissent conjointement ladite puissance d'anticipation de vol *Ws*.*

3. Procédé de régulation d'une installation motrice (1) selon l'une quelconque des revendications 1 à 2,
**caractérisé en ce que** ladite deuxième consigne *W₂** est égale à
- la valeur nulle lorsque une première somme desdites puissances principales maximales *W_{Max1}* de chaque moteur principal (11,12) est supérieure ou égale à ladite puissance de vol *Wᵥₒₗ,*
- la différence entre ladite puissance de vol *Wᵥₒₗ* et ladite première somme desdites puissances principales maximales *W_{Max1}* lorsque ladite différence est positive et inférieure à une seconde somme desdites puissances secondaires maximales *W_{Max2}* de chaque moteur secondaire (21), et
- ladite seconde somme desdites puissances secondaires maximales *W_{Max2}* lorsque ladite différence est supérieure à ladite seconde somme desdites puissances secondaires maximales *W_{Max2}*.

4. Procédé de régulation d'une installation motrice (1) selon l'une quelconque des revendications 1 à 3,
**caractérisé en ce que** l'on définit ladite puissance de vol *Wᵥₒₗ* nécessaire pour le vol dudit aéronef (30) selon la phase de vol dudit aéronef (30).

5. Procédé de régulation d'une installation motrice (1) selon l'une quelconque des revendications 1 à 4,
**caractérisé en ce que** l'on détermine ladite puissance de vol *Wᵥₒₗ* nécessaire pour le vol dudit aéronef (30) à partir des courbes de performances dudit aéronef (30).

6. Procédé de régulation d'une installation motrice (1) selon l'une quelconque des revendications 1 à 5,
**caractérisé en ce qu'**en cas de panne d'au moins un moteur principal (11,12), on régule le fonctionnement de chaque moteur secondaire (21) selon ladite première consigne *NR** de ladite fréquence de rotation *NR* dudit rotor principal (31).

7. Procédé de régulation d'une installation motrice (1) selon l'une quelconque des revendications 1 à 5,
**caractérisé en ce qu'**en cas de panne d'au moins un moteur principal (11,12), on régule le fonctionnement de chaque moteur secondaire (21) selon ladite deuxième consigne *W₂** de puissance.

8. Procédé de régulation d'une installation motrice (1) selon l'une quelconque des revendications 1 à 5,
**caractérisé en ce qu'**en cas de panne d'au moins un moteur principal (11,12), on régule le fonctionnement de chaque moteur secondaire (21) afin qu'il fournisse ladite puissance secondaire maximale *W_{Max2}.*

9. Procédé de régulation d'une installation motrice (1) selon l'une quelconque des revendications 1 à 8,
**caractérisé en ce que** ledit premier groupe moteur (10) comporte deux moteurs principaux (11,12) identiques et ledit second groupe moteur (20) comporte un moteur secondaire (21).

10. Installation motrice (1) destinée à un aéronef (30) comprenant un premier groupe moteur (10), un second groupe moteur (20) et une boîte de transmission principale de puissance (2), les deux groupes moteurs (10,20) entrainant mécaniquement ladite boîte de transmission principale de puissance (2) afin de mettre en rotation au moins un arbre principal de sortie (3) de ladite boîte de transmission principale de puissance (2), ledit arbre principal de sortie (3) étant solidaire en rotation d'un rotor principal (31) dudit aéronef (30) ayant une fréquence de rotation *NR,* ledit premier groupe moteur (10) comprenant au moins deux moteurs principaux (11,12) et un premier dispositif de régulation (15), ledit premier dispositif de régulation (15) étant configuré pour réguler le fonctionnement de chaque moteur principal (11,12) selon une première consigne *NR** de ladite fréquence de rotation *NR* dudit rotor principal (31), ledit second groupe moteur (20) comprenant au moins un moteur secondaire (21) et un deuxième dispositif de régulation (25), ledit deuxième dispositif de régulation (25) étant configuré pour réguler le fonctionnement de chaque moteur secondaire (21) selon une deuxième consigne *W₂** de puissance dudit second groupe moteur (20), ladite installation motrice (1) devant fournir une puissance de vol *Wᵥₒₗ* nécessaire pour le vol dudit aéronef (30), chaque moteur principal (11,12) pouvant fournir une puissance principale maximale *W_{Max1},* chaque moteur secondaire (21) pouvant fournir une puissance secondaire maximale *W_{Max2},*
**caractérisée en ce que** ladite installation motrice (1) comporte un moyen de calcul (6) étant configuré pour déterminer ladite deuxième consigne *W₂** afin que chaque moteur secondaire (21) fonctionne uniquement lorsque ladite puissance de vol *Wᵥₒₗ* est supérieure à la somme desdites puissances principales maximales *W_{Max1}* de chaque moteur principal (11, 12).

11. Installation motrice (1) selon la revendication 10,
**caractérisée en ce que** ledit moyen de calcul (6) comporte un moyen d'anticipation (7) étant configuré pour déterminer une puissance d'anticipation de vol *Ws** nécessaire au vol dudit aéronef (30) et que doivent fournir conjointement ledit premier groupe moteur (10) et ledit second groupe moteur (20), une troisième consigne *W₁** à fournir par ledit premier groupe moteur (10), définie telle que *Ws** = *W*₁*** + *W*₂*, étant utilisée afin que ledit premier groupe moteur (10) et ledit second groupe moteur (20) anticipent un besoin de puissance dudit aéronef (30) et fournissent conjointement ladite puissance d'anticipation de vol *Ws*.*

12. Installation motrice (1) selon l'une quelconque des revendications 10 à 11,
**caractérisée en ce que** ladite deuxième consigne *W₂** est égale à
- la valeur nulle lorsque une première somme desdites puissances principales maximales *W_{Max1}* de chaque moteur principal (11,12) est supérieure ou égale à ladite puissance de vol *Wᵥₒₗ*,
- à la différence entre ladite puissance de vol *Wᵥₒₗ* et ladite première somme desdites puissances principales maximales *W_{Max1}* de chaque moteur principal (11,12) lorsque ladite différence est positive et inférieure à une seconde somme desdites puissances secondaires maximales *W_{Max2}*, et
- ladite seconde somme desdites puissances secondaires maximales *W_{Max2}* lorsque ladite différence est supérieure à ladite seconde somme desdites puissances secondaires maximales *W_{Max2}*.

13. Installation motrice (1) selon l'une quelconque des revendications 10 à 12,
**caractérisée en ce que** ladite puissance de vol *Wᵥₒₗ* nécessaire pour le vol dudit aéronef (30) est définie selon la phase de vol dudit aéronef (30), à partir des courbes de performances dudit aéronef (30).

14. Installation motrice (1) selon l'une quelconque des revendications 10 à 13,
**caractérisée en ce que** ledit premier groupe moteur (10) comporte deux moteurs principaux (11,12) identiques et ledit second groupe moteur (20) comporte un moteur secondaire (21).

15. Aéronef (30) à voilure tournante comportant au moins un rotor principal (31), une installation motrice (1) et une installation avionique (5), ladite installation motrice (1) entrainant en rotation ledit rotor principal (31),
**caractérisé en ce que** ladite installation motrice (1) est selon l'une quelconque des revendications 10 à 14.

## Patentansprüche

1. Verfahren zum Regeln einer Triebwerksanlage (1) eines Drehflügelluftfahrzeugs (30), wobei die Triebwerksanlage (1) ein erstes Antriebsaggregat (10), ein zweites Antriebsaggregat (20) und ein Hauptleistungsgetriebe (2) aufweist, wobei die beiden Antriebsaggregate (10, 20) mechanisch das Hauptleistungsgetriebe (2) antreiben, um eine Hauptantriebswelle (3) des Hauptleistungsgetriebes (2) zu drehen, wobei die Hauptantriebswelle (3) drehfest mit einem Hauptrotor (31) des Luftfahrzeugs (30) verbunden ist, der eine Rotationsfrequenz NR aufweist, wobei das erste Antriebsaggregat (10) mindestens zwei Hauptmotoren (11, 12) aufweist, das zweite Antriebsaggregat (20) mindestens einen sekundären Motor (21) aufweist, wobei jeder Hauptmotor (11, 12) eine maximale Hauptleistung *W_{Max1}* liefern kann, wobei jeder sekundäre Motor (21) eine maximale sekundäre Leistung *W_{Max2}* liefern kann,
bei dem
- ein erster Sollwert *NR** der Rotationsfrequenz NR des Hauptrotors (31) bestimmt wird,
- der Betrieb eines jeden Hauptmotors (11, 12) gemäß dem ersten Sollwert *NR** der Rotationsfrequenz NR geregelt wird,
- eine Flugleistung *Wᵥₒₗ* bestimmt wird, die für den Flug des Luftfahrzeugs (30) erforderlich ist, wobei die Flugleistung *Wᵥₒₗ* von der Triebwerksanlage (1) geliefert wird,
- ein zweiter Sollwert *W₂** für die von dem zweiten Antriebsaggregat (20) zu liefernde Leistung bestimmt wird, damit jeder sekundäre Motor (21) nur in Betrieb ist, wenn die Flugleistung *Wᵥₒₗ* größer ist als die Summe der maximalen Hauptleistungen *W_{Max1}* eines jeden Hauptmotors (11, 12), und
- der Betrieb eines jeden sekundären Motors (21) gemäß dem zweiten Leistungssollwert *W₂** geregelt wird.

2. Verfahren zum Regeln einer Triebwerksanlage (1) nach Anspruch 1,
**dadurch gekennzeichnet, dass**
- eine prognostizierte Flugleistung *W_{S}** bestimmt wird, die erforderlich ist für den Flug des Luftfahrzeug (30) und die das erste Antriebsaggregat (10) und das zweite Antriebsaggregat (20) gemeinsam liefern müssen,
- ein dritter Sollwert *W₁** der von dem ersten Antriebsaggregat (10) zu liefernden Leistung bestimmt wird, derart, dass *W_{S}* = W₁ ** + *W₂*,* und
- der dritte Leistungssollwert *W₁** verwendet wird, damit das erste Antriebsaggregat (10) und das zweite Antriebsaggregat (20) einen Leistungsbedarf des Luftfahrzeugs (30) prognostizieren, und zusammen die prognostizierte Flugleistung *W_{S}** liefern.

3. Verfahren zum Regeln einer Triebwerksanlage (1) nach einem der Ansprüche 1 bis 2,
**dadurch gekennzeichnet, dass** der zweite Sollwert *W₂** gleich
- dem Wert Null ist, wenn eine erste Summe der maximalen Hauptleistungen *W_{Max1}* eines jeden Hauptmotors (11, 12) größer oder gleich der Flugleistung *Wᵥₒₗ* ist,
- der Differenz zwischen der Flugleistung *Wᵥₒₗ* und der ersten Summe der maximalen Hauptleistungen *W_{Max1}* ist, wenn die Differenz positiv und kleiner als eine zweite Summe der maximalen sekundären Leistungen *W_{Max2}* eines jeden sekundären Motors (21) ist, und
- der zweiten Summe der maximalen sekundären Leistungen *W_{Max2}* ist, wenn die Differenz größer als die zweite Summe der maximalen sekundären Leistungen *W_{Max2}* ist.

4. Verfahren zum Regeln einer Triebwerksanlage (1) nach einem der Ansprüche 1 bis 3,
**dadurch gekennzeichnet, dass** die für den Flug des Luftfahrzeugs (30) erforderliche Flugleistung *Wᵥₒₗ* gemäß der Flugphase des Luftfahrzeugs (30) definiert wird.

5. Verfahren zum Regeln einer Triebwerksanlage (1) nach einem der Ansprüche 1 bis 4,
**dadurch gekennzeichnet, dass** die für den Flug des Luftfahrzeugs (30) erforderliche Flugleistung *Wᵥₒₗ* ausgehend von Leistungskurven des Luftfahrzeugs (30) bestimmt wird.

6. Verfahren zum Regeln einer Triebwerksanlage (1) nach einem der Ansprüche 1 bis 5,
**dadurch gekennzeichnet, dass** im Fall eines Ausfalls mindestens eines Hauptmotors (11, 12) der Betrieb eines jeden sekundären Motors (21) gemäß dem ersten Sollwert *NR** der Rotationsfrequenz *NR* des Hauptrotors (31) geregelt wird.

7. Verfahren zum Regeln einer Triebwerksanlage (1) nach einem der Ansprüche 1 bis 5,
**dadurch gekennzeichnet, dass** im Fall eines Ausfalls mindestens eines Hauptmotors (11, 12) der Betrieb eines jeden sekundären Motors (21) gemäß dem zweiten Leistungssollwert *W₂** geregelt wird.

8. Verfahren zum Regeln einer Triebwerksanlage (1) nach einem der Ansprüche 1 bis 5,
**dadurch gekennzeichnet, dass** im Fall eines Ausfalls mindestens eines Hauptmotors (11, 12) der Betrieb eines jeden sekundären Motors (21) so geregelt wird, dass er die maximale sekundäre Leistung *W_{Max2}* liefert.

9. Verfahren zum Regeln einer Triebwerksanlage (1) nach einem der Ansprüche 1 bis 8,
**dadurch gekennzeichnet, dass** das erste Antriebsaggregat (10) zwei identische Hauptmotoren (11, 12) aufweist, und das zweite Antriebsaggregat (20) einen sekundären Motor (21) aufweist.

10. Triebwerksanlage (1) für ein Luftfahrzeug (30) mit einem ersten Antriebsaggregat (10), einem zweiten Antriebsaggregat (20) und einem Hauptleistungsgetriebe (2), wobei die beiden Antriebsaggregate (10, 20) mechanisch das Hauptleistungsgetriebe (2) antreiben, um mindestens eine Hauptantriebswelle (3) des Hauptleistungsgetriebes (2) zu drehen, wobei die Hauptantriebswelle (3) drehfest mit einem Hauptrotor (31) des Luftfahrzeugs (30) verbunden ist, der eine Rotationsfrequenz *NR* aufweist, wobei das erste Antriebsaggregat (10) mindestens zwei Hauptmotoren (11, 12) und eine erste Regelvorrichtung (15) aufweist, die erste Regelvorrichtung (15) ausgebildet ist zum Regeln des Betriebs eines jeden Hauptmotors (11, 12) gemäß einem ersten Sollwert *NR** der Rotationsfrequenz *NR* des Hauptrotors (31), wobei das zweite Antriebsaggregat (20) mindestens einen sekundären Motor (21) und eine zweite Regelvorrichtung (25) aufweist, wobei die zweite Regelvorrichtung (25) ausgebildet ist, um den Betrieb eines jeden sekundären Motors (21) gemäß einem zweiten Leistungssollwert *W₂** des zweiten Antriebsaggregats (20) zu regeln, wobei die Triebwerksanlage (1) eine Flugleistung *Wᵥₒₗ* liefern muss, die für den Flug des Luftfahrzeugs (30) erforderlich ist, wobei jeder Hauptmotor (11, 12) eine maximale Hauptleistung *W_{Max1}* liefern kann, und jeder sekundäre Motor (21) eine maximale sekundäre Leistung *W_{Max2}* liefern kann,
**dadurch gekennzeichnet, dass** die Triebwerksanlage (1) eine Rechenmittel (6) aufweist, das ausgebildet ist, um den zweiten Sollwert *W₂** zu bestimmen, damit jeder sekundäre Motor (21) nur dann in Betrieb ist, wenn die Flugleistung *Wᵥₒₗ* größer als die Summe der maximalen Hauptleistungen *W_{Max1}* eines jeden Hauptmotors (11, 12) ist.

11. Triebwerksanlage (1) nach Anspruch 10,
**dadurch gekennzeichnet, dass** das Rechenmittel (6) ein Prognostizierungsmittel (7) aufweist, das ausgebildet ist, um eine prognostizierte Flugleistung *W_{S}** zu bestimmen, die für den Flug des Luftfahrzeugs (30) erforderlich ist und die das erste Antriebsaggregat (10) und das zweite Antriebsaggregat (20) zusammen liefern müssen, wobei ein dritter Sollwert *W₁**, der von dem ersten Antriebsaggregat (10) geliefert werden muss, der definiert ist, sodass *W_{S}**= *W₁** + *W₂** gilt, verwendet wird, damit das erste Antriebsaggregat (10) und das zweite Antriebsaggregat (20) einen Leistungsbedarf des Luftfahrzeugs (30) prognostizieren und zusammen die prognostizierte Flugleistung *W_{S}** liefern.

12. Triebwerksanlage (1) nach einem der Ansprüche 10 bis 11,
**dadurch gekennzeichnet, dass** der zweite Sollwert *W₂** gleich
- dem Wert Null ist, wenn eine erste Summe der maximalen Hauptleistungen *W_{Max1}* eines jeden Hauptmotors (11, 12) größer oder gleich der Flugleistung *Wᵥₒₗ* ist,
- der Differenz zwischen der Flugleistung *Wᵥₒₗ* und der ersten Summe der maximalen Hauptleistungen *W_{Max1}* eines jeden Hauptmotors (11, 12) ist, wenn die Differenz positiv und kleiner als eine zweite Summe der maximalen sekundären Leistungen *W_{Max2}* ist, und
- der zweiten Summe der maximalen sekundären Leistungen *W_{Max2}* ist, wenn die Differenz größer als die zweite Summe der maximalen sekundären Leistungen *W_{Max2}* ist.

13. Triebwerksanlage (1) nach einem der Ansprüche 10 bis 12,
**dadurch gekennzeichnet, dass** die für den Flug des Luftfahrzeugs (30) erforderliche Flugleistung *Wᵥₒₗ* gemäß der Flugphase des Luftfahrzeugs (30) ausgehend von Leistungskurven des Luftfahrzeugs (30) definiert wird.

14. Triebwerksanlage (1) nach einem der Ansprüche 10 bis 13,
**dadurch gekennzeichnet, dass** das erste Antriebsaggregat (10) zwei identische Hauptmotoren (11, 12) aufweist, und das zweite Antriebsaggregat (20) einen sekundären Motor (21) aufweist.

15. Drehflügelluftfahrzeug (30) mit mindestens einem Hauptrotor (31), einer Triebwerksanlage (1) und einer Avionikanlage (5), wobei die Triebwerksanlage (1) den Hauptrotor (31) dreht,
**dadurch gekennzeichnet, dass** die Triebwerksanlage (1) eine Triebwerksanlage gemäß einem der Ansprüche 10 bis 14 ist.

## Claims

1. Method of regulating a power plant (1) of a rotary wing aircraft (30), said power plant (1) comprising a first engine group (10), a second engine group (20) and a main power transmission gearbox (2), the two engine groups (10,20) mechanically driving said main power transmission gearbox (2) in order to rotate a main output shaft (3) of said main power transmission gearbox (2), said main output shaft (3) being integral in rotation with a main rotor (31) of said aircraft (30) having a frequency of rotation *NR,* said first engine group (10) comprising at least two main engines (11,12), said second engine group (20) comprising at least one secondary engine (21), each main engine (11,12) being capable of delivering a main maximum power *W_{Max1}*, each secondary engine (21) being capable of delivering a secondary maximum power *W_{Max2}*,
in the course of which,
- a first setpoint *NR** of said frequency of rotation *NR* of said main rotor (31) is determined,
- the operation of each main engine (11,12) is regulated according to said first setpoint *NR** of said frequency of rotation *NR,*
- a flight power *Wᵥₒₗ* necessary for the flight of said aircraft (30) is determined, said flight power *Wᵥₒₗ* being delivered by said power plant (1),
- a second setpoint *W₂** of power to be delivered by said second engine group (20), so that each secondary engine (21) operates only when said flight power *Wᵥₒₗ* is greater than the sum of said main maximum powers *Wₘₐₓ₁* of each main engine (11,12), is determined, and
- the operation of each secondary engine (21) is regulated according to said second setpoint *W₂** of power.

2. Method of regulating a power plant (1) according to claim 1,
**characterised in that**
- a flight anticipation power *Ws** necessary for the flight of said aircraft (30) and which has to be delivered jointly by said first engine group (10) and said second engine group (20) is determined,
- a third setpoint *W₁** of the power to be delivered by said first engine group (10) is determined, such that: *Ws** = *W*₁* + *W*₂*, and
- said third setpoint *W₁** of power is used so that said first engine group (10) and said second engine group (20) anticipate a power need of said aircraft (30) and deliver jointly said flight anticipation power *Ws*.*

3. Method of regulating a power plant (1) according to any one of claims 1 to 2,
**characterised in that** said second setpoint *W₂** is equal to
- the value zero when a first sum of said main maximum powers *W_{Max1}* of each main engine (11, 12) is greater than or equal to said flight power *Wᵥₒₗ*,
- the difference between said flight power *Wᵥₒₗ* and said first sum of said main maximum powers *W_{Max1}* when said difference is positive and less than a second sum of said main secondary maximum powers *W_{Max2}* of each secondary engine (21), and
- said second sum of said secondary maximum powers *W_{Max2}* when said difference is greater than said second sum of said secondary maximum powers *W_{Max2}.*

4. Method of regulating a power plant (1) according to any one of claims 1 to 3,
**characterised in that** said flight power *Wᵥₒₗ* necessary for the flight of said aircraft (30) is defined according to the phase of flight of said aircraft (30).

5. Method of regulating a power plant (1) according to any one of claims 1 to 4,
**characterised in that** said flight power *Wᵥₒₗ* necessary for the flight of said aircraft (30) is determined from performance curves of said aircraft (30).

6. Method of regulating a power plant (1) according to any one of claims 1 to 5,
**characterised in that** in the event of failure of at least one main engine (11,12), the operation of each secondary engine (21) is regulated according to said first setpoint *NR** of said frequency of rotation *NR* of said main rotor (31).

7. Method of regulating a power plant (1) according to any one of claims 1 to 5,
**characterised in that** in the event of failure of at least one main engine (11,12), the operation of each secondary engine (21) is regulated according to said second setpoint *W₂** of power.

8. Method of regulating a power plant (1) according to any one of claims 1 to 5,
**characterised in that** in the event of failure of at least one main engine (11,12), the operation of each secondary engine (21) is regulated so that it delivers said secondary maximum power *W_{Max2}.*

9. Method of regulating a power plant (1) according to any one of claims 1 to 8,
**characterised in that** said first engine group (10) comprises two identical main engines (11,12) and said second engine group (20) comprises one secondary engine (21).

10. Power plant (1) intended for an aircraft (30) comprising a first engine group (10), a second engine group (20) and a main power transmission gearbox (2), the two engine groups (10,20) mechanically driving said main power transmission gearbox (2) in order to rotate at least one main output shaft (3) of said main power transmission gearbox (2), said main output shaft (3) being integral in rotation with a main rotor (31) of said aircraft (30) having a frequency of rotation *NR,* said first engine group (10) comprising at least two main engines (11,12) and a first regulating device (15), said first regulating device (15) being configured to regulate the operation of each main engine (11,12) according to a first setpoint *NR** of said frequency of rotation *NR* of said main rotor (31), said second engine group (20) comprising at least one secondary engine (21) and a second regulating device (25), said second regulating device (25) being configured to regulate the operation of each secondary engine (21) according to a second setpoint *W₂** of power of said second engine group (20), said power plant (1) having to deliver a flight power *Wᵥₒₗ* necessary for the flight of said aircraft (30), each main engine (11,12) being capable of delivering a main maximum power *W_{Max1},* each secondary engine (21) being capable of delivering a secondary maximum power *W_{Max2}*,
**characterised in that** said power plant (1) comprises a calculation means (6) being configured to determine said second setpoint *W₂** so that each secondary engine (21) operates only when said flight power *Wᵥₒₗ* is greater than the sum of said main maximum powers *W_{Max1}* of each main engine (11, 12).

11. Power plant (1) according to claim 10,
**characterised in that** said calculation means (6) comprises an anticipation means (7) being configured to determine a flight anticipation power *Ws** necessary for the flight of said aircraft (30) and which has to be delivered jointly by said first engine group (10) and said second engine group (20), a third setpoint *W₁** to be delivered by said first engine group (10), defined such that *Ws** = *W*₁* + *W*₂*, being used so that said first engine group (10) and said second engine group (20) anticipate a power need of said aircraft (30) and deliver jointly said flight anticipation power *Ws*.*

12. Power plant (1) according to any one of claims 10 to 11,
**characterised in that** said second setpoint *W₂** is equal to
- the value zero when a first sum of said main maximum powers *W_{Max1}* of each main engine (11,12) is greater than or equal to said flight power *Wᵥₒₗ*,
- to the difference between said flight power *Wᵥₒₗ* and said first sum of said main maximum powers *Wₘₐₓ₁* of each main engine (11,12) when said difference is positive and less than a second sum of said main secondary maximum powers *W_{Max2}*, and
- said second sum of said secondary maximum powers *W_{Max2}* when said difference is greater than said second sum of said secondary maximum powers *W_{Max2}*.

13. Power plant (1) according to any one of claims 10 to 12,
**characterised in that** said flight power *Wᵥₒₗ* necessary for the flight of said aircraft (30) is defined according to the phase of flight of said aircraft (30), on the basis of performance curves of said aircraft (30).

14. Power plant (1) according to any one of claims 10 to 13,
**characterised in that** said first engine group (10) comprises two identical main engines (11,12) and said second engine group (20) comprises one secondary engine (21).

15. Rotary wing aircraft (30) comprising at least a main rotor (31), a power plant (1) and an avionics installation (5), said power plant (1) driving said main rotor (31) in rotation,
**characterised in that** said power plant (1) is according to one of claims 10 to 14.
